# EUROPÄISCHE PATENTSCHRIFT

(11) **EP 0 842 502 B1**
(45) Veröffentlichungstag und Bekanntmachung des Hinweises auf die Patenterteilung: **16.12.1998**
(21) Anmeldenummer: 97914277.5
(22) Anmeldetag: 20.03.1997
(51) Int. Cl.: G07F 7/08

(54) **VERFAHREN ZUR BARGELDLOSEN ZAHLUNGSABWICKLUNG**
CASHLESS PAYMENT METHOD
PROCEDE DE PAIEMENT SANS NUMERAIRE

(30) Priorität: 23.05.1996 DE 19620857; 20.06.1996 DE 19624693
(43) Veröffentlichungstag der Anmeldung: 20.05.1998
(73) Patentinhaber: Seng, Ulrich, 82335 Berg (DE)
(72) Erfinder: Seng, Ulrich, 82335 Berg (DE)
(74) Vertreter: Schoppe, Fritz, Dipl.-Ing.
(86) Internationale Anmeldenummer: EP9701414
(87) Internationale Veröffentlichungsnummer: WO9744761

(56) Entgegenhaltungen:
- EP-A- 0 107 865
- EP-A- 0 486 204
- EP-A- 0 590 861
- WO-A-93/03446
- GB-A- 2 151 061
- GB-A- 2 273 629
- US-A- 4 317 957
- US-A- 5 184 345

## Beschreibung

Die vorliegende Erfindung befaßt sich mit einem Verfahren zur bargeldlosen Zahlungsabwicklung mittels einer Karte, insbesondere mittels einer Scheckkarte oder einer Kreditkarte.

Es ist heutzutage üblich geworden, an sogenannten Scheckkartenkassen, wie sie in vielen Kaufhäusern und Tankstellen angetroffen werden können, bargeldlos zu bezahlen. Bei einem typischen Zahlungsvorgang unter Verwendung der Scheckkarte wird einem Magnetstreifenlesegerät die auf einem Magnetstreifen der Scheckkarte gespeicherte Information gelesen. Typischerweise umfaßt diese Karteninformation den Kartentyp, die Bankleitzahl der Bank des Karteninhabers, dessen Kontonummer und den Namen des Karteninhabers. Der zu zahlende Geldbetrag wird von der Scheckkarten-Kasse ermittelt. Der Karteninhaber gibt über ein Eingabeterminal seine Geheimnummer ein. Sodann erfolgt typischerweise unter Verwendung eines automatischen Wählsystems der Aufbau einer Datenverbindung mittels Modem über das analoge Telefonnetz zu einer Autorisierungsstelle des Zahlungssystems. Die Autorisierungsstelle überprüft, ob die Karteninformation in sich schlüssig ist, d.h. ob Bankleitzahl, Kontonummer, Scheckkartennummer und Geheimnummer als zusammenpassend zu einem bestehenden Konto einer Bank registriert sind, für die die Autorisierungsstelle tätig ist. Sodann wird überprüft, ob der zu zahlende Geldbetrag durch den momentanen Stand des Kontos des Karteninhabers gedeckt ist. Falls dies der Fall ist, überträgt die Autorisierungsstelle eine Autorisierungsnummer an die Zahlungsstelle zurück und führt die Geldbetragsabbuchung von dem Konto durch.

Ein in der Praxis deutlich störender Nachteil dieses bekannten bargeldlosen Zahlungsverfahrens besteht darin, daß der Verbindungsaufbau zwischen einer Zahlungsstelle und der Autorisierungsstelle häufig erhebliche Zeit in Anspruch nimmt, wobei diese Bearbeitungszeit häufig in die Größenordnung von fast einer Minute kommt. Derartige Wartezeiten sind bei den heutigen Personalkosten nicht länger vertretbar.

Ein weiteres Problem besteht darin, daß durch die häufig relativ lange Nutzung einer Leitung zwischen der Zahlungsstelle und der Autorisierungsstelle die Zahlungsstelle mit nennenswerten Fernmeldekosten belastet wird.

Derartigen Problemen kann man zwar dadurch begegnen, daß man zwischen der Zahlungsstelle und der Autorisierungsstelle eine festgeschaltete Leitung vorsieht. Derartige, festgeschaltete Leitungen führen jedoch typischerweise zu nicht hinnehmbar hohen Mietkosten, die vom Betreiber der Leitungen in Rechnung gestellt werden.

Aus der DE 4416254 Al ist es bereits bekannt, innerhalb eines Alarmsystems zur Vermeidung von festgeschalteten Leitungen zwischen dezentralen Einheiten und einer Zentrale die dezentralen Einheiten mit Schnittstellen zu versehen, welche eine Kommunikation von Befehlen und Meldungen über den sogenannten D-Kanal des ISDN-Netzes im sogenannten "UUS-frame" ermöglichen. Jedoch ist nach den geltenden postalischen Bedingungen die Nutzung des D-Kanals des ISDN-Netzes zu anderen Zwecken als zur Steuerung eines gewünschten Verbindungsaufbaues oder Verbindungsabbaus unzulässig oder bedarf zumindest einer speziell hierfür angebotenen Netzdienstleistung der deutschen Telekom. Dieses bekannte Verfahren stellt also auch eine nicht genehmigungsfähige, illegale Nutzung des ISDN-Netzes dar, da dort Daten über den Signalisierungskanal übertragen und ausgetauscht werden, ohne daß es beabsichtigt wäre, eine Verbindung über den Nutzkanal des digitalen Netzes aufzubauen.

Aus der EP 0486204 B1 ist bereits ein Verfahren zur Gültigkeitsprüfung der Kreditkartennummer einer Kreditkarte bekannt, bei dem ein Kunde über das ISDN-Netz bei einer Geschäftsstelle anruft und hierbei seine Kreditkartennummer mitteilt. Zur Prüfung der Kreditkartennummer wird von der Geschäftsstelle aus über den D-Kanal des ISDN-Netzes und ein speicherprogrammierbares Schaltnetzwerk eine Datenbank abgefragt, die bei Gültigkeit der Kreditkarte eine Gültigerklärungsnummer über den D-Kanal an die Geschäftsstelle zurückliefert. Sobald die Kreditkartennummer als gültig erkannt ist, kann die Geschäftsstelle den vom Kunden gewünschten Kauf abwickeln. Auch bei diesem bekannten System ist bei dem Verbindungsaufbau zwischen der Geschäftsstelle und der Datenbank eine Nutzung des B-Kanales ausgeschlossen, da zwangsläufig für die Datenübermittlung zwischen der Geschäftsstelle und der Datenbank nur vom D-Kanal Gebrauch gemacht wird. Wie bereits erläutert, ist eine derartige Nutzung des D-Kanals unzulässig oder bedarf zumindest einer speziell hierfür angebotenen Netzdienstleistung des betreffenden Netzbetreibers.

Ausgehend von diesem Stand der Technik liegt der vorliegenden Erfindung die Aufgabe zugrunde, ein Verfahren zur bargeldlosen Zahlungsabwicklung mittels einer Scheckkarte zu schaffen, welches eine extrem sichere und schnelle Abwicklung ermöglicht und sich mit niedrigen Kosten für die Nutzung eines Netzes zwischen der Zahlungsstelle und der Autorisierungsstelle realisieren läßt.

Diese Aufgabe wird durch ein Verfahren gemäß Patentanspruch 1 gelöst.

Das erfindungsgemäße Verfahren zur bargeldlosen Zahlungsabwicklung mittels einer Karte, insbesondere mittels einer Scheckkarte oder Kreditkarte, umfaßt folgende Verfahrensschritte:
- Erfassen einer Karteninformation von der Karte an einer Zahlungsstelle eines Zahlungssystems;
- Erfassen eines zu zahlenden Geldbetrages an der Zahlungsstelle;
- Übertragen der Karteninformation und des Geldbetrages von der Zahlungsstelle über einen Signalisierungskanal eines digitalen Datennetzes zu einer Autorisierungsstelle oder einer Bank des Zahlungssystems;
- Prüfen der Gültigkeit der Karteninformation und der Deckung eines von der Karteninformation bezeichneten Kontos in Höhe des zu zahlenden Geldbetrages;
- Erzeugen einer Autorisierungsinformation, welche die Autorisierung oder Nicht-Autorisierung für die Zahlungsabwicklung darstellt;
- Prüfen, ob ein Nutzkanal des Anschlusses der Autorisierungsstelle oder der Bank an das digitale Netz frei ist;
- falls der Nutzkanal des Anschlusses der Autorisierungsstelle oder der Bank an das digitale Netz frei ist, Übertragen der Autorisierungsinformation von der Autorisierungsstelle oder der Bank über den Nutzkanal zu der Zahlungsstelle;
- falls der Nutzkanal des Anschlusses der Autorisierungsstelle oder Bank an das digitale Netz belegt ist, Übertragen der Autorisierungsinformation von der Autorisierungsstelle oder Bank über den Signalisierungskanal zu der Zahlungsstelle.

Gemäß einem besonders bedeutenden Erfindungsaspekt wird bei dem Schritt des Übertragens der Karteninformation und des Geldbetrages ferner die Rufnummer der Zahlungsstelle von der Zahlungsstelle über den Signalisierungskanal des digitalen Datennetzes zu der Autorisierungstelle übertragen, welche prüft, ob die Rufnummer der Zahlungsstelle in einem Verzeichnis von Vertragspartner-Zahlungsstellen enthalten ist. Falls dies nicht der Fall ist, wird die Verbindung abgebrochen. Diese Prüfung schließt insbesondere für den Fall, daß es sich bei dem verwendeten Digitalnetz um das ISDN-Netz (dienstintegriertes Digitalnetz) handelt, einen mißbräuchlichen Zugriff ausgehend von einem Anschluß, der nicht als Anschluß eines Vertragspartners der Autorisierungsstelle verzeichnet ist, aus.

Selbst wenn bei einem Manipulationsversuch das an die Autorisierungsstelle gesandte Datenpaket mit einer gefälschten Rufnummer eines Vertragspartners versehen wäre, so würde dies aufgrund der Funktionsweise des ISDN-Netzes nicht zu einer Rückmeldung zu dem Anschluß führen, von dem aus der Fälschungsversuch unternommen wurde. Damit ist ein Zugriff von Nicht-Vertragspartnern der Autorisierungsstelle auf die Autorisierungsstelle ausgeschlossen, wodurch die Sicherheit der Zahlungsabwicklung deutlich erhöht wird.

Ein bevorzugtes Ausführungsbeispiel des erfindungsgemäßen Verfahrens wird nachfolgend unter Bezugnahme auf die beiliegenden Zeichnungen näher erläutert. Es zeigen:
- Fig. 1: ein Flußdiagramm eines ersten bevorzugten Ausführungsbeispiels des erfindungsgemäßen Verfahrens zur bargeldlosen Zahlungsabwicklung; und
- Fig. 2: ein Flußdiagramm eines zweiten bevorzugten Ausführungsbeispiels des erfindungsgemäßen Verfahrens zur bargeldlosen Zahlungsabwicklung.

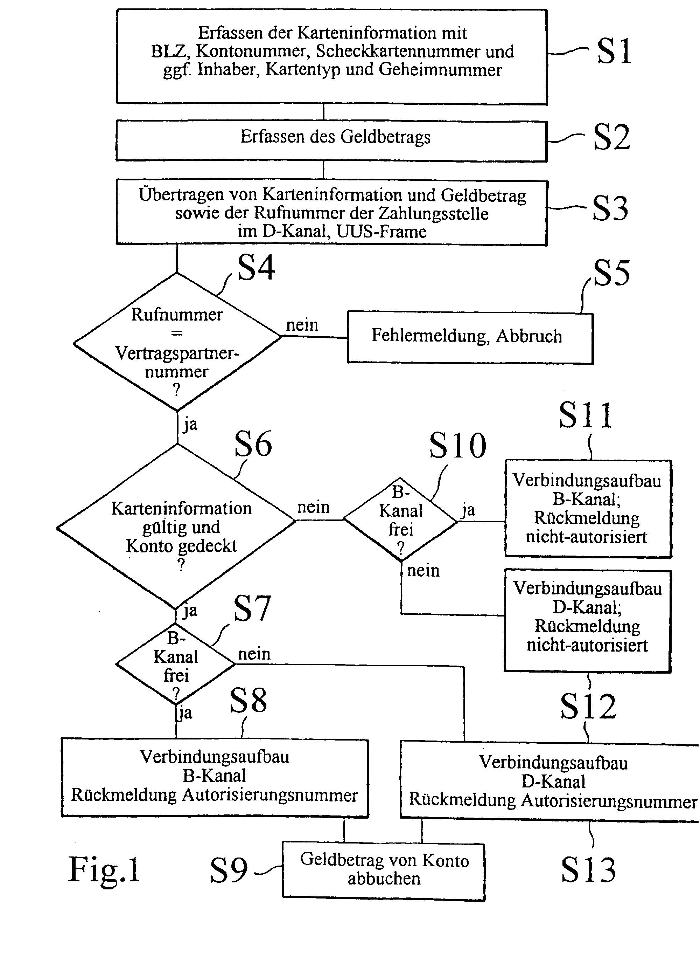

Zunächst wird unter Bezugnahme auf Fig. 1 ein Flußdiagramm zur Erläuterung eines ersten Ausführungsbeispiels des erfindungsgemäßen Verfahrens zur bargeldlosen Zahlungsabwicklung hier am Beispielsfall einer Zahlungsabwicklung mittels einer Scheckkarte näher beschrieben.

Bei einem ersten Verfahrensschritt S1 wird die maschinenlesbare Information auf dem Magnetstreifen einer Scheckkarte mittels eines entsprechenden Lesegeräts erfaßt. Diese Information umfaßt typischerweise die Kontonummer und die Scheckkartennummer. In der Regel umfaßt sie ferner die Bankleitzahl, gegebenenfalls den Inhaber und den Kartentyp der betreffenden Scheckkarte. Durch separate Eingabe durch den Karteninhaber an einem Eingabegerät, das mit der Kasse der Zahlungstelle verbunden ist, wird optional ferner die Geheimnummer erfaßt, die der Scheckkarte zugeordnet sein kann. Wie an sich allgemein bekannt ist, soll dies den Mißbrauch einer abhandengekommenen Scheckkarte zumindest erschweren.

Bei einem darauffolgenden Verfahrensschritt S2 wird der zu zahlende Geldbetrag erfaßt.

Bei einem Schritt S3 überträgt die Zahlungsstelle im Signalisierungskanal oder D-Kanal des ISDN-Netzes einige Byte vor dem sogenannten UUS-Frame (Feld für die Kommunikation zwischen den Benutzern dieses Netzes) ihre eigene Rufnummer, und im sogenannten UUS-Frame die Karteninformation und den Geldbetrag an die Autorisierungsstelle des Zahlungssystems.

Bei der Autorisierungsstelle des Zahlungssystems handelt es sich beispielsweise um die sogenannte Clearing-Stelle der Banken, die an dem Euroscheckkarten-Zahlungssystem teilnehmen.

Bei dem darauffolgenden Schritt S4 überprüft die Autorisierungsstelle, ob die ihr von der Zahlungsstelle übertragene Rufnummer (Calling Party Number) in einem Verzeichnis der Rufnummern der Vertragspartner-Zahlungsstellen dieser Autorisierungsstelle enthalten ist. Falls dies nicht der Fall ist, schreitet das Verfahren mit dem Schritt S5 fort, bei dem innerhalb der Autorisierungsstelle eine Fehlermeldung erzeugt wird, die einen fehlerhaften, nicht berechtigten Zugriffsversuch darstellt, woraufhin die Verbindung abgebrochen wird.

Falls sich die bei dem Schritt S4 überprüfte Rufnummer als eine Rufnummer einer Vertagspartner-Zahlungsstelle erweist, fährt das Verfahren mit dem Schritt S6 fort. Bei dem Schritt S6 wird zunächst überprüft, ob die Karteninformation gültig ist. Im Einzelfall wird hierbei überprüft, ob die übertragenen Bestandteile der Karteninformation, also beispielsweise die Bankleitzahl, Kontonummer, Scheckkartennummer, der Inhaber, der Kartentyp und die Geheimnummer als zusammengehörig unter einer Kontonummer einer Bank, für die die Autorisierungsstelle tätig ist, abgespeichert sind. Falls dies der Fall ist, also die Karteninformation als gültig erachtet wird, überprüft noch innerhalb dieses Verfahrensschrittes S6 die Autorisierungsstelle, ob der bei dem Schritt S3 übertragene Geldbetrag durch den momentanen Stand des genannten Kontos abgedeckt ist. Falls dies der Fall ist, fährt das Verfahren mit dem Schritt S7 fort. Anderenfalls fährt das Verfahren mit dem Schritt S10 fort.

Bei dem Schritt S7 überprüft das Verfahren, ob der Nutzkanal oder B-Kanal des Anschlusses der Autorisierungsstelle an das digitale Netz, nämlich das ISDN-Netz, frei ist. Falls dies der Fall ist, erfolgt ein Verbindungsaufbau über den Nutzkanal oder B-Kanal, woraufhin eine Autorisierungsnummer für den betreffenden Abbuchungsvorgang rückgemeldet wird (Schritt S8).

Bei dem anschließenden Verfahrensschritt S9 wird sodann der betreffende Geldbetrag vn dem Konto abgebucht. Obwohl dies im Flußdiagramm nicht im einzelnen gezeigt ist, ist es möglich, die Abbuchung des Geldbetrags von dem Konto nur dann vorzunehmen, wenn vorher die Zahlungsstelle das Eintreffen der Autorisierungsnummer bestätigt hat.

Bei dem Verfahrensschritt S10 überprüft das Programm wiederum, ob ein Nutzkanal oder B-Kanal des Anschlusses der Autorisierungsstelle an das ISDN-Netz frei ist. Falls dies der Fall ist, erfolgt wiederum ein Verbindungsaufbau über den Nutzkanal bzw. B-Kanal bei dem Schritt S11, woraufhin die Rückmeldung erfolgt, daß keine Autorisierung für die betreffende Abbuchung gegeben wird.

Ergibt sich bei dem Prüfschritt S10, daß der B-Kanal belegt ist, so erfolgt die Rückmeldung, daß der betreffende Abbuchungsvorgang nicht autorisiert wird, über den D-Kanal bzw. Signalisierungskanal des ISDN-Netzes.

Wird bei dem Prüfschritt S7 festgestellt, daß der Nutzkanal bzw. B-Kanal des Anschlusses der Autorisierungsstelle an das ISDN-Netz nicht frei ist, so fährt das Verfahren mit dem Schritt S13 fort, bei dem wiederum über den Signalisierungskanal bzw. D-Kanal eine Rückmeldung der Autorisierungsnummer für den betreffenden Zahlungsvorgang von der Autorisierungsstelle an die Zahlungsstelle erfolgt, woraufhin das Verfahren mit dem Schritt S9 durch Abbuchung des Geldbetrages von dem Konto abgeschlossen wird.

Das erfindungsgemäße Verfahren wurde unter Bezugnahme auf das ISDN-Netz erläutert. Für den Fachmann ist es offensichtlich, daß andere Datennetze gleichfalls eingesetzt werden können, soweit diese über einen Signalisierungskanal für den Verbindungsaufbau und einen Nutzkanal verfügen.

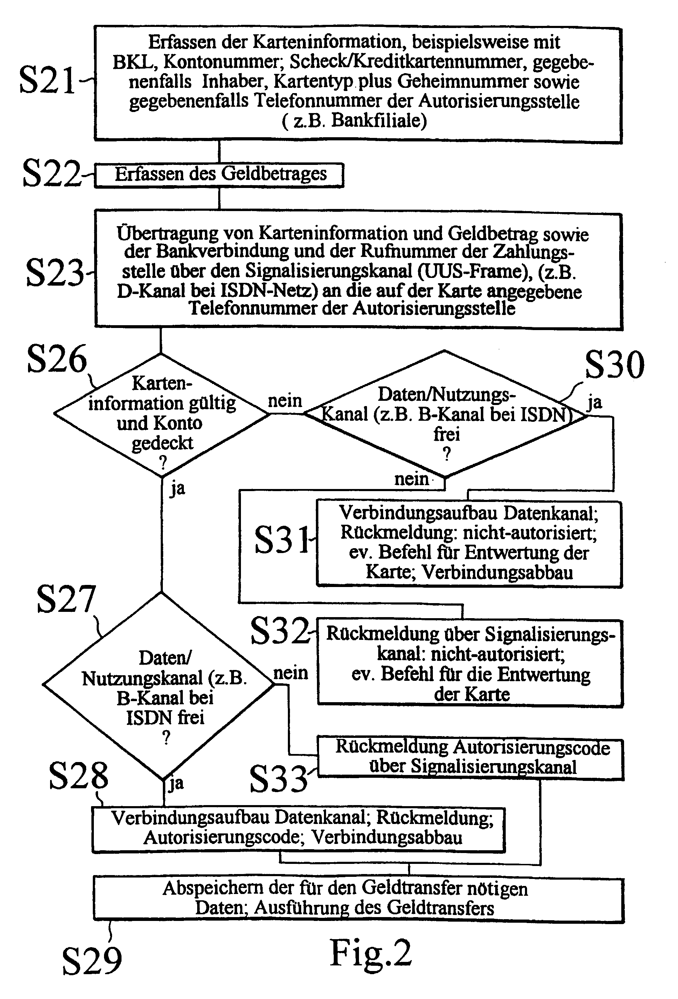

Nunmehr wird unter Bezugnahme auf Fig. 2 ein bevorzugtes weiteres Ausführungsbeispiel des erfindungsgemäßen Verfahrens zur bargeldlosen Zahlungsabwicklung beschrieben.

Bei einem ersten Verfahrensschritt S21 wird wiederum eine als Karteninformation bezeichnete maschinenlesbare Information vorzugsweise von einem Magnetstreifen einer Scheckkarte oder einer Kreditkarte oder einer anderen geeigneten Karte für eine Zahlungsabwicklung gelesen. Diese Karteninformation umfaßt im Falle der Scheckkarte wiederum typischerweise die Kontonummer und die Scheckkartennummer. Im Falle der Kreditkarte umfaßt sie die Kreditkartennummer. Im Falle der Scheckkarte kann neben der Kontonummer auch die Bankleitzahl, der Inhabername, der Kartentyp und die Geheimnummer auf der Karte als Karteninformation enthalten sein. Im Falle der Kreditkarte wird typischerweise die Angabe des Inhabers, die Angabe des Kreditkartentyps bzw. Kreditkartenunternehmens in der Karteninformation enthalten sein.

Gemäß einem vorteilhaften Aspekt dieses Ausführungsbeispiels umfaßt die Karteninformation ferner die Telefonnummer der Autorisierungsstelle. Es sei angemerkt, daß unter dem Begriff "Autorisierungsstelle" im Sinne dieser Anmeldung nicht nur die unter Bezugnahme auf das erste Ausführungsbeispiel bereits erwähnte Clearing-Stelle der Banken zu verstehen ist, sondern beispielsweise auch eine Bankfiliale selbst, da das erfindungsgemäße Verfahren es ermöglicht, aufgrund der einfachen Datenkommunikation ohne Zwischenschaltung einer eigenen Clearing-Stelle die Autorisierung für einen Geldübertragungsvorgang direkt von einer Bankfiliale oder Bankzentrale vornehmen zu lassen. Mit anderen Worten umfaßt der Begriff "Autorisierungsstelle" im Sinne der vorliegenden Anmeldung jegliche zu einer Zahlungsgenehmigung berechtigte Stelle innerhalb eines Zahlungssystems.

Bei dem darauffolgenden Schritt S22 wird wiederum der Geldbetrag erfaßt.

Obwohl dies in dem Flußdiagramm der Fig. 2 nicht gezeigt ist, kann analog zu dem Verfahren nach Fig. 1 ein auf den Schritt 22 des Erfassens des Geldbetrags folgender Schritt vorgesehen sein, bei dem die Autorisierungsstelle entweder in Form der Bankfiliale oder in Form einer bezüglich der Bankfiliale externen Stelle überprüft, ob die ihr von der Zahlungsstelle übertragene Rufnummer (Calling Party Number) in einem Verzeichnis der Rufnummern der Vertragspartner-Zahlungsstellen dieser Autorisierungsstelle enthalten ist. Falls dies nicht der Fall ist, schreitet das Verfahren mit einem ebenfalls nicht gezeigten Schritt fort, bei dem innerhalb der Autorisierungsstelle eine Fehlermeldung erzeugt wird, die einen fehlerhaften, nicht berechtigten Zugriffsversuch darstellt, woraufhin die Verbindung abgebrochen wird.

Bei dem folgenden Schritt S23 werden Karteninformation und Geldbetrag, die Bankverbindung beispielsweise in Form von Kontonummer und Bankleitzahl und die Rufnummer der Zahlungsstelle über den Signalisierungskanal an die auf der Karte angegebenen Telefonnummer der Autorisierungsstelle übertragen. Wie bereits erwähnt, handelt es sich im Falle des ISDN-Netzes bei dem Signalisierungskanal um den D-Kanal des ISDN-Netzes, wobei in diesem Fall die genannten Informationen innerhalb des UUS-Frame übertragen werden.

Bei dem auf den Schritt S23 folgenden Prüfungsschritt S26 wird überprüft, ob die Karteninformation gültig ist und ob das Konto gedeckt ist. Falls die Karteninformation als gültig erachtet wird und der bei dem Schritt S23 übertragene Geldbetrag durch den momentanen Stand des genannten Kontos abgedeckt ist, fährt das Verfahren mit dem Schritt S27 fort. Anderenfalls fährt das Verfahren mit dem Schritt S30 fort.

Bei dem Schritt S27 prüft das Verfahren, ob der Datenkanal bzw. Nutzungskanal bzw. Nachrichtenkanal frei ist. Im Falle des ISDN-Netzes wird überprüft, ob der B-Kanal des ISDN-Netzes frei ist.

Falls dies der Fall ist, fährt das Verfahren mit dem Schritt S28 fort, bei dem ein Verbindungsaufbau über den Datenkanal bzw. Nutzungskanal bzw. Nachrichtenkanal herbeigeführt wird. Sodann erfolgt eine Rückmeldung eines Autorisierungscodes von der Autorisierungsstelle an die Zahlungsstelle. Bei dem Autorisierungscode kann es sich um eine Autorisierungsnummer für den betreffenden Abbuchungsvorgang handeln.

Der Autorisierungscode kann jedoch weitere Informationen enthalten, die von der Autorisierungsstelle an die Zahlungsstelle übermittelt werden sollen. So mag es zweckmäßig sein, dem Kunden bei knapper oder nur geringfügig mangelnder Deckung seines Kontos mitzuteilen, daß die momentane Abbuchung akzeptiert und somit autorisiert wird, jedoch weitere Abbuchungen nur dann akzeptiert werden, wenn das Konto vorab wieder in den Haben-Bereich gebracht wird.

Bei dem abschließenden Verfahrensschritt S29 werden die für den Geldtransfer nötigen Daten in der Autorisierungsstelle bzw. der betreffenden Bankfiliale abgespeichert. Bei der späteren Ausführung des Geldtransfers, also der Überweisung, kann zusätzlich zu der Karteninformation und dem Geldbetrag auch die Telefonnummer der Zahlungsstelle an die Zielbank mitübermittelt werden, so daß nachträglich überprüft werden kann, ob die Telefonnummer der Zahlungsstelle mit einer die Zahlungsstelle betreffenden Kontonummer übereinstimmt bzw. die die Zahlungsstelle betreffenden Daten korrekt sind.

Bei dem Verfahrensschritt S30 überprüft das Programm wiederum, ob ein Daten/Nutzungskanal bzw. Nachrichtenkanal des Anschlusses der Autorisierungsstelle an das digitale Datennetz frei ist. Im Falle des ISDN-Netzes wird überprüft, ob der B-Kanal frei ist. Falls dies der Fall ist, wird bei dem Schritt S31 ein Verbindungsaufbau über den Datenkanal herbeigeführt. Sodann bewirkt die Autorisierungsstelle eine Rückmeldung an die Zahlungsstelle, daß der betreffende Abbuchungsvorgang nicht autorisiert ist. Auch hier können in Ergänzung zu der Mitteilung der Nicht-Autorisierung weitere passende Informationen oder Befehle an die Zahlungsstelle übertragen werden. Beispielsweise kann ein Befehl zur Entwertung der Scheckkarten bzw. Kreditkarte übertragen werden, durch den ein entsprechend modifiziertes Scheckkarten- oder Kreditkartenlesegerät die Karte beispielsweise durch Lochung oder Zerstörung des Magnetstreifens unbrauchbar macht.

Falls der Daten- bzw. Nutzungskanal bzw. Nachrichtenkanal des digitalen Netzes nicht frei ist, erfolgt bei dem Schritt S32 die Rückmeldung über den Signalisierungskanal, das der betreffende bargeldlose Zahlungsvorgang nicht autorisiert ist. Auch hier kann ergänzend der Befehl für die Entwertung der Karte übertragen werden.

Falls es sich bei der Überprüfung gemäß Schritt S27 ergibt, daß der Daten/Nutzungskanal des digitalen Netzes nicht frei ist, so fährt das Programm mit dem Schritt S33 fort. In diesem Fall erfolgt die Rückmeldung des Autorisierungscodes über den Signalisierungskanal. Mangels Verbindungsaufbau ist auch hier ebenso wie im Falle des Schrittes S32 ein Verbindungsabbau nicht erforderlich.

Insbesondere die zweite Ausführungsform des beschriebenen erfindungsgemäßen Verfahrens eignet sich zur direkten digitalen Zahlungsbwicklung zwischen der Zahlungsstelle und einer Bankfiliale, wobei hier die Bankfiliale die Funktion der Autorisierungsstelle selbst ausüben kann.

Wie erwähnt, kann anstelle des bevorzugt verwendeten ISDN-Netzes jegliches andere digitale Datennetz eingesetzt werden, soweit dieses über einen Signalisierungskanal sowie über einen Datenkanal oder Nutzungskanal verfügt.

## Patentansprüche

1. Verfahren zur bargeldlosen Zahlungsabwicklung mittels einer Karte, insbesondere mittels einer Scheckkarte oder Kreditkarte, mit folgenden Verfahrensschritten:
- Erfassen (S1) einer Karteninformation von der Karte an einer Zahlungsstelle eines Zahlungssystems;
- Erfassen (S2) eines zu zahlenden Geldbetrages an der Zahlungsstelle;
- Übertragen (S3) der Karteninformation und des Geldbetrages von der Zahlungsstelle über einen Signalisierungskanal eines digitalen Datennetzes zu einer Autorisierungsstelle oder einer Bank des Zahlungssystems;
- Prüfen (S6) der Gültigkeit der Karteninformation und der Deckung eines von der Karteninformation bezeichneten Kontos in Höhe des zu zahlenden Geldbetrages;
- Erzeugen (S8, S11, S12, S13) einer Autorisierungsinformation, welche die Autorisierung oder Nicht-Autorisierung für die Zahlungsabwicklung darstellt,
gekennzeichnet durch folgende Schritte:
- Prüfen (S7, S10), ob ein Nutzkanal des Anschlusses der Autorisierungsstelle oder der Bank an das digitale Netz frei ist;
- falls der Nutzkanal des Anschlusses der Autorisierungsstelle oder der Bank an das digitale Netz frei ist, Übertragen (S8, S11) der Autorisierungsinformation von der Autorisierungsstelle oder der Bank über den Nutzkanal zu der Zahlungsstelle;
- falls der Nutzkanal des Anschlusses der Autorisierungsstelle oder Bank an das digitale Netz belegt ist, Übertragen (S12, S13) der Autorisierungsinformation von der Autorisierungsstelle oder Bank über den Signalisierungskanal zu der Zahlungsstelle.

2. Verfahren nach Anspruch 1, bei dem die Karteninformation die Kontonummer und die Kartennummer umfaßt.

3. Verfahren nach Anspruch 2, bei dem die Karteninformation ferner mindestens eine der folgenden Informationen umfaßt:
die Bankleitzahl, den Namen des Kontoinhabers, den Kartentyp und eine Geheimnummer.

4. Verfahren nach einem der Ansprüche 1 bis 3, bei dem mit dem Schritt (S3) des Übertragens der Karteninformation und des Geldbetrages ferner die Rufnummer der Zahlungsstelle über den Signalisierungskanal des digitalen Datennetzes an die Autorisierungsstelle oder Bank übertragen wird.

5. Verfahren nach Anspruch 4, ferner mit dem weiteren Schritt des Prüfens (S4), ob die Rufnummer der Zahlungsstelle in einem Verzeichnis von Vertragspartner-Zahlungsstellen in der Autorisierungsstelle oder Bank enthalten ist, und mit dem weiteren Schritt des Abbrechens (S5) der Verbindung, falls dies nicht der Fall ist.

6. Verfahren nach einem der Ansprüche 1 bis 5, bei dem die Autorisierungsinformation im Falle der Gültigkeit der Karteninformation und im Falle der Deckung des Kontos eine Autorisierungsnummer für die betreffende Zahlungsabwicklung umfaßt.

7. Verfahren nach Anspruch 1, bei dem die Karteninformation ferner die Telefonnummer der Autorisierungsstelle oder der Bank umfaßt, wobei die Übertragung der Karteninformation und des Geldbetrages von der Zahlungsstelle über den Signalisierungskanal zu der Autorisierungsstelle oder der Bank des Zahlungssystems erfolgt, die durch die betreffende Telefonnummer festgelegt ist.

8. Verfahren nach einem der Ansprüche 1 bis 7, bei dem vor Ausführung einer Überveisung zusätzlich zu der Karteninformation und den Geldbetrag die Telefonummer der Zahlungsstelle an eine Zielbank übermittelt wird, um eine Überprüfung zu ermöglichen, ob die Telefonnummer der Zahlungsstelle mit der Kontonummer der Zahlungsstelle registriert ist und somit die angegebene Kontonummer der Zahlungsstelle korrekt ist.

## Claims

1. A method for the cashless settlement of payment by means of a card, particularly by means of a cheque card or credit card, comprising the following method steps:
- registering (S1) card information from the card at a payment position of a payment system;
- registering (S2) an amount of money to be paid at the payment position;
- transmitting (S3) the card information and the amount of money from the payment position to an authorization position or a bank of the payment system over a signalling channel of a digital data network;
- checking (S6) the validity of the card information and that an account denoted by the card information provides cover for the amount of money to be paid;
- creating (S8, S11, S12, S13) authorization information which represents authorization or non-authorization for the settlement of payment;
characterized by the following steps:
- checking (S7, S10) whether an information channel of the connection of the authorization position or the bank to the digital network is idle;
- transmitting (S8, S11) the authorization information from the authorization position or the bank to the payment position over the information channel if the information channel of the connection of the authorization position or the bank to the digital network is idle;
- transmitting (S12, S13) the authorization information from the authorization position or bank to the payment position over the signalling channel if the information channel of the connection of the authorization position or bank to the digital network is busy.

2. A method according to claim 1, wherein the card information comprises the account number and the card number.

3. A method according to claim 2, wherein the card information also comprises at least one of the following items of information:
the bank code, the name of the card holder, the card type and a secret number.

4. A method according to one of the claims 1 to 3, wherein with the step (S3) of transmitting the card information and the amount of money, the call number of the payment position is also transmitted to the authorization position or bank over the signalling channel of the digital data network.

5. A method according to claim 4, with the additional step of checking (S4) whether the call number of the payment position is contained in a list of contracting party payment positions in the authorization position or bank and with the additional step of releasing (S5) the connection if this is not the case.

6. A method according to one of the claims 1 to 5, wherein the authorization information comprises an authorization number for the settlement of payment if the card information is valid and if the account provides cover.

7. A method according to claim 1, wherein the card information also comprises the telephone number of the authorization position or the bank, where the card information and the amount of money are transmitted over the signalling channel from the payment position to the payment system authorization position or bank which is identified by the telephone number in question.

8. A method according to one of the claims 1 to 7, wherein the telephone number of the payment position, as well as the card information and the amount of money, is transmitted to a target bank before a remittance is enacted so as to enable a check to be made as to whether the telephone number of the payment position is registered with the account number of the payment position and thus that the specified account number of the payment position is correct.

## Revendications

1. Procédé de paiement sans numéraire à l'aide d'une carte, en particulier à l'aide d'une carte de banque ou d'une carte de crédit, aux étapes de procédé suivantes:
- saisie (S1), à un lieu de paiement d'un système de paiement, d'une information de carte de la carte;
- saisie (S2), au lieu de paiement, d'un montant à payer ;
- transmission (S3) de l'information de carte et du montant du lieu de paiement, par l'intermédiaire d'un canal de signalisation d'un réseau de données numérique, à un lieu d'autorisation ou à une banque du système de paiement;
- vérification (S6) de la validité de l'information de carte et de la couverture d'un compte désigné par l'information de carte à concurrence du montant à payer;
- génération (S8, S11, S12, S13) d'une information d'autorisation représentant l'autorisation ou la non-autorisation de l'exécution du paiement;
caractérisé par les étapes suivantes:
- vérification (S7, S10) de la disponibilité d'un canal utilitaire du raccordement du lieu d'autorisation ou de la banque au réseau numérique;
- si le canal utilitaire du raccordement du lieu d'autorisation ou de la banque au réseau numérique est libre, transmission (S8, S11) de l'information d'autorisation du lieu d'autorisation ou de la banque, par le canal utilitaire, au lieu de paiement;
- si le canal utilitaire du raccordement du lieu d'autorisation ou de la banque au réseau numérique est occupé, transmission (S12, S13) de l'information d'autorisation du lieu d'autorisation ou de la banque, par le canal de signalisation, au lieu de paiement.

2. Procédé suivant la revendication 1, dans lequel l'information de carte comprend le numéro de compte et le numéro de carte.

3. Procédé suivant la revendication 2, dans lequel l'information de carte comprend, par ailleurs, au moins l'une des informations suivantes:
le code de la banque, le nom du titulaire de compte, le type de carte et un numéro secret.

4. Procédé suivant l'une des revendications 1 à 3, dans lequel avec l'étape (S3) de transmission de l'information de carte et du montant est, par ailleurs, transmis au lieu d'autorisation ou à la banque le numéro d'appel du lieu de paiement, via le canal de signalisation du réseau de données numérique.

5. Procédé suivant la revendication 4, par ailleurs, avec l'autre étape de vérification (S4) si le numéro d'appel du lieu de paiement est contenu dans une liste de lieux de paiement de partenaires contractuels au lieu d'autorisation ou à la banque, et avec l'autre étape de rupture (S5) de la communication si cela n'est pas le cas.

6. Procédé suivant l'une des revendications 1 à 5, dans lequel l'information d'autorisation en cas de validité de l'information de carte et en cas de couverture du compte comprend un numéro d'autorisation pour le paiement en question.

7. Procédé suivant la revendication 1, dans lequel l'information de carte comprend, par ailleurs, le numéro de téléphone du lieu d'autorisation ou de la banque, la transmission de l'information de carte et du montant s'effectuant du lieu de paiement, via le canal de signalisation, au lieu d'autorisation ou à la banque du système de paiement qui est déterminé par le numéro de téléphone en question.

8. Procédé suivant l'une des revendications 1 à 7, dans lequel, avant l'exécution d'un virement, il est transmis à une banque destinataire, outre l'information de carte et le montant, le numéro de téléphone du lieu de paiement, afin de permettre une vérification de si le numéro de téléphone du lieu de paiement est enregistré avec le numéro de compte du lieu de paiement et, donc, si le numéro de compte du lieu de paiement indiqué est correct.
